# EUROPÄISCHE PATENTSCHRIFT

(11) **EP 0 360 913 B1**
(45) Veröffentlichungstag und Bekanntmachung des Hinweises auf die Patenterteilung: **30.03.1994**
(21) Anmeldenummer: 88116229.1
(22) Anmeldetag: 30.09.1988
(51) Int. Cl.: H04M 3/42

(54) **Verfahren zur Aktivierung des Bereitschaftszustandes einer Fernsprechendeinrichtung in einem rechnergesteuerten Kommunikationssystem**
Method of actuating the call state of a subscriber terminal in a processor-controlled communication system
Méthode d'activation de l'état de marche d'un poste dans un système de communication sous commande d'un ordinateur

(43) Veröffentlichungstag der Anmeldung: 04.04.1990
(73) Patentinhaber: SIEMENS AKTIENGESELLSCHAFT, 80333 München (DE)
(72) Erfinder: Böttger, Detlev, D-4600 Dortmund (DE); Mai, Bernd, D-4600 Dortmund 15 (DE)

(56) Entgegenhaltungen:
- EP-A- 0 178 403
- EP-A- 0 227 327
- WO-A-88/02206
- DE-A- 2 738 834

## Beschreibung

Die Erfindung betrifft ein Verfahren zur Aktivierung des Bereitschaftszustandes einer Fernsprechendeinrichtung in einem Kommunikationssystem mit einer zentralen Steuerrechnereinheit, mit einem Programmspeicher, einem Arbeitsspeicher und einem Anlagekonfigurationsdaten und benutzerindividuelle Daten enthaltenden Kundendatenspeicher und mit einem die Systemkomponenten verbindenden Systembus, wobei für den Anschluß der Fernsprechendeinrichtung eine Nutzverbindung und zusätzlich eine für den digitalen Datenaustausch dienende Steuerverbindung vorgesehen ist und die Fernsprechendeinrichtung neben dem üblichen Handapparat eine ein Mikrophon und einen Lautsprecher beinhaltende Freisprecheinrichtung aufweist, wobei die Wahlinformationsabgabe auch vermittels einer an die jeweilige Anschlußleitung anschaltbaren Zusatzeinrichtung dadurch erfolgen kann, daß durch eine entsprechende Anforderung die Rufnummer des gewünschten Teilnehmeranschlusses aus einem darin enthaltenen Speicher abgerufen und als Wahlinformation dem Kommunikationssystem übermittelt wird.

Ein solches Verfahren ist aus den Dokumenten WO-A-88 02206 und EP-A-0 227 327 bekannt.

Die voraussetzungsgemäß vorgesehene Nutzverbindung und die davon getrennte Steuerverbindung kann als Nutzkanal bzw. als Steuerkanal physikalisch auf dem gleichen Übertragungsmedium getrennt durch unterschiedliche Zeitlagen realisiert sein. Diese beiden Verbindungsmöglichkeiten können aber auch jeweils durch zwei Adernpaare gebildet werden. Solche modern konzipierten Kommunikationssysteme sind nicht nur zur eigentlichen Vermittlungssteuerung, sondern auch zu einer Steuerung bzw. Realisierung zusätzlicher, über den Vermittlungsvorgang hinausgehender Steuervorgänge befähigt. Diese zusätzlichen Funktionen werden im allgemeinen als Leistungsmerkmale bezeichnet, wobei eine große Anzahl unterschiedlicher Leistungsmerkmale bekannt ist. Derartige Leistungsmerkmale können entweder bei Belegen der Vermittlungseinrichtung oder aber während einer bereits bestehenden Gesprächsverbindung eingeleitet werden.

Dies kann beispielsweise durch die Wahl bestimmter Ziffern bzw. Ziffernkombinationen und/oder durch die Betätigung sogenannter Funktionstasten erfolgen. Zu solchen Leistungsmerkmalen zählen beispielsweise akustische Hinweise für wartende Teilnehmer, die Verhinderung unerwünschter Verbindungen, die selbsttätige Rufweiterleitung, das Anklopfen und das unmittelbare Ansprechen eines angewählten Teilnehmers. Mittels dieses letztgenannten Leistungsmerkmals kann z.B. an einer angewählten Teilnehmerstelle bei Eingabe einer bestimmten Codeinformation die Einschaltung der neben dem Handapparat zusätzlich vorhandenen Freisprecheinrichtung durch die Wirksamschaltung des ihr zugehörigen Mikrophons und Lautsprechers bewirkt werden.

Neben der Bereitstellung von Leistungsmerkmalen, die auch von der Art und dem Funktionsumfang der verwendeten Endgeräte abhängig sind, ist man bestrebt, die von den Teilnehmern durchzuführenden Prozeduren zu vereinfachen. So ist es beispielsweise möglich jeweils einen bestimmten Funktionsablauf durch die Betätigung einer hierfür vorgesehenen Taste zu aktivieren. Es ist auch eine Wahlhilfe in der Weise möglich, das eine Wahlinformation aus einem Speicher einer der Fernsprechendeinrichtung zugeordneten Zusatzeinrichtung durch einfache Tastenbetätigung abgerufen wird.

Es ist die Aufgabe der Erfindung im Zusammenhang mit der Herstellung des Bereitschaftszustandes einer Fernsprechendeinrichtung ein hohes Maß an Bedienungskomfort zu gewährleisten.

Dies wird dadurch erreicht, daß bei der genannten Anforderung durch die Zusatzeinrichtung selbst oder durch eine ihr zugeordnete Schnittstelleneinrichtung eine durch die zentrale Steuerrechnereinheit des Kommunikationssystems auswertbare Kenninformation gebildet und dorthin übertragen wird, daß dadurch die systemseitige Registrierung der anschließend aufgrund der Anforderung automatisch übertragenen Wahlinformation veranlaßt wird, daß mit der Registrierung der Kenninformation und im Zusammenhang mit dem systemseitigen Erkennen, daß die Wahlinformation von der Zusatzeinrichtung (PC) stammt, und der aus dem Kundendatenspeicher ausgelesenen Information über die zu dem betreffenden Anschluß vorgesehenen Gerätekombinationsart durch die zentrale Steuerrechnereinheit über die Steuerverbindung der der Fernsprechendeinrichtung eine Signalisierungsinformation zugeführt wird, durch die die Freisprecheinrichtung vorbereitend wirksam geschaltet wird und daß unmittelbar nach der Beendigung der Wahlinformationsabgabe die endgültige Kopplung mit der Freisprecheinrichtung erfolgt, so daß der Teilnehmer in die Gesprächsverbindung eintreten kann, ohne eine Prozedur an der Fernsprechendeinrichtung vornehmen zu müssen.

Wird also eine Wahlhilfe durch die Aktivierung der einer Zusatzeinrichtung diesbezüglich zugeordneten Funktionen in Anspruch genommen, so wird damit automatisch die Fernsprechendeinrichtung in den Bereitschaftszustand geschaltet. Durch die vorgenommene vorbereitende Wirksamschaltung der Freisprecheinrichtung kann nach der Verbindungsdurchschaltung ohne irgendeine weitere Handhabung die Gesprächsaufnahme erfolgen. Geht die Wahlinformation von einer Zusatzeinrichtung aus, so ist damit automatisch die Aktivierung der Freisprecheinrichtung verknüpft.

Gemäß einer Weiterbildung der Erfindung wird die Zusatzeinrichtung gegebenenfalls unter Zwischenschaltung einer Schnittstelleneinrichtung an die genannte Nutzverbindung zur Übertragung der normalerweise über die Steuerverbindung übermittelten Wahlinformationen wirksam angeschaltet und es erfolgt gleichzeitig die Abtrennung der Fernsprechendeinrichtung von der Nutzverbindung. Es wird bei dieser Anschaltung die durch die zentrale Steuerrechnereinheit registrierbare Kenninformation gebildet.

Aufgrund der Tatsache, daß die Kenninformation und die Wahlinformation über die Nutzverbindung übertragen wird kann das System die Inanspruchnahme der Zusatzeinrichtung erkennen, so daß daraus die Notwendigkeit für die Aktivierung der einer jeweils angeschlossenen Fernsprechendeinrichtung zugehörigen Freisprecheinrichtung abgeleitet wird.

Gemäß einer Weiterbildung der Erfindung ist als Zusatzeinrichtung eine Datenverarbeitungseinrichtung, vorzugsweise ein Personalcomputer vorgesehen, der eine Speichereinheit mit einer darin abgespeicherten Datei bzw. mit mehreren nach unterschiedlichen Kriterien geordneten Dateien für die aufgrund der Anforderung erfolgende automatische Feststellung der Rufnummer von Teilnehmeranschlüssen und/oder teilnehmerbezogene Informationen einschließlich der zugehörigen Teilnehmerrufnummer zur Darstellung aus dem der Datenverarbeitungseinrichtung zugehörigen Bildschirm enthält. Die auf dem Bildschirm dargestellte Rufnummer eines Teilnehmeranschlusses wird durch eine entsprechende Markierung gekennzeichnet, wodurch die betreffende Rufnummer gegebenenfalls nach Betätigung einer hierfür vorgesehenen Auftragstaste als Dateninformation einer Schnittstelleneinrichtung übergeben wird, die sie in einem geforderten Übertragungsverfahren unmittelbar als Wahlinformation zu dem Kommunikationssystem nach Bildung der dort vermittels einer entsprechenden Indikationsschaltung auswertbaren Kenninformation überträgt.

Es wird also die am Bildschirm des Personalcomputers angezeigte Rufnummer unmittelbar für die Herstellung einer Verbindung aus der betreffenden Speichereinheit abgerufen, wobei der betreffende Speicherplatz durch die vorgenommene Markierung bestimmt wird. Die Datenverarbeitungseinrichtung wird also in vorteilhafter Weise zur Teilnehmerunterstützung für die automatische Absetzung der Wahlinformation mitverwendet. Die aufgrund unterschiedlicher Vorgänge am Bildschirm darzustellenden Rufnummern werden sinnvollerweise externe Teilnehmer betreffen, so daß bei dieser Art der Wahlhilfe neben der enormen Vereinfachung die ansonsten bei einer manuellen Eingabe von vielstelligen externen Rufnummern wahrscheinliche fehlerhafte Eingabe entfällt.

Gemäß einer Weiterbildung der Erfindung kann die Markierung durch das Setzen des Cursors auf eine vorbestimmte Stelle der am Bildschirm angezeigten Rufnummer erfolgen. Diese vorbestimmte Stelle kann beispielsweise das erste Zeichen der dargestellten Rufnummer sein.

Weitere vorteilhafte Ausgestaltungen der Erfindung sind den restlichen abhängigen Ansprüchen zu entnehmen.
Das erfindungsgemäße Verfahren wird nachstehend anhand einer Figur erläutert.

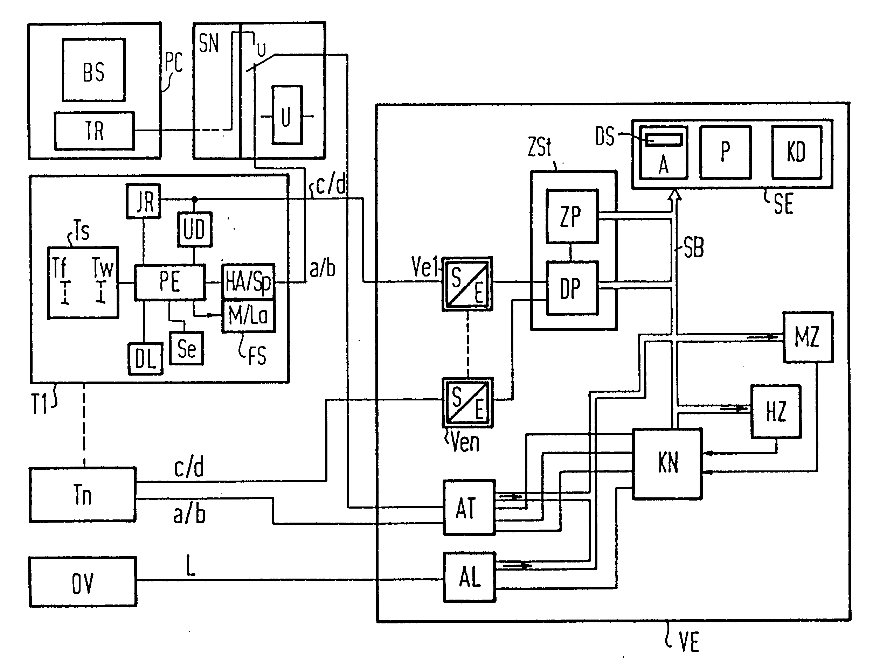

Die Figur zeigt im Blockschaltbild ausgewählte Funktionseinheiten eines Kommunikationssystems in Form einer Fernsprechvermittlungsanlage VE, an die Teilnehmerendeinrichtungen T1...Tn angeschlossen sind. Dieser Anschluß erfolgt im Ausführungsbeispiel bei einer Vermittlungsanlage, der die analoge Sprachübertragung zugrunde liegt, sternförmig über eine jeweils vieradrige Anschlußleitung, die aus einem Sprechadernpaar a/b und einem Signalisierungsadernpaar c/d besteht. Bei einem ausschließlich digitalen System wären die Steuerverbindung und die für die Übertragung der Sprachinformation vorgesehene Nutzverbindung auf einer zweiadrigen Anschlußleitung realisierbar, wobei dann mindestens ein Nutzkanal und ein Steuerkanal für jede Endeinrichtung durch eine bestimmte Zeitlage realisiert werden kann. Zur im wesentlichen prozeduralen Anpassung werden die Teilnehmerendeinrichtungen T1...Tn über eine Anschalteeinheit AT, die die Rufanschaltung beinhaltet, mit der elektronischen Koppeleinrichtung KN verbunden. Für die zu einer öffentlichen Vermittlungsstelle OV oder zu einem privaten Netz führenden Leitungen L erfolgt die Verbindung über eine Anschalteeinheit AL. Die Steuerungsaufgaben der Vermittlungsanlage VE übernimmt die zentrale Steuerrechnereinheit ZSt, die über einen Systembus SB mit einer Speichereinheit SE, der Anschalteeinheit AT, der Koppeleinrichtung KN und weiteren Systemkomponenten, wie beispielsweise einer für die Bildung von Mehrfrequenzcodezeichen dienenden Einheit MZ und einer für die Erzeugung der Höhrtöne zuständigen Einheit HZ, verbunden ist. Die Aufgaben der zentralen Steuerrechnereinheit sind im Ausführungsbeispiel auf zwei Prozessoren verteilt. Der Prozessor ZP dient beispielsweise der vermittlungs- und betriebstechnischen Steuerung. Durch den Prozessor DP erfolgt unter Einschaltung einer ein Sendeteil S und ein Empfangsteil E enthaltenden Verarbeitungseinheit Ve die Signalisierungsbearbeitung. Solche Verarbeitungseinheiten Ve1...Ven sind jeweils einem Signalisierungsadernpaar c/d zugeordnet.

Die Prozessoren ZP und DP haben über den Systembus SB Zugriff zu den in der Speichereinrichtung SE abgelegten Daten. Die Speichereinrichtung SE besteht aus einem Arbeitsspeicher A, einem Programmspeicher P und einem Kundendatenspeicher KD. Im Programmspeicher P sind das Anlagenbetriebsprogramm und zu ihm gehörige betriebstechnische Daten abgespeichert. In dem Speicherteil KD sind Anlagen, Konfigurationsdaten und benutzerindividuelle Daten enthalten. Hierzu gehören beispielsweise die den einzelnen Teilnehmerendeinrichtungen T1...Tn zugeteilten Berechtigungen. Das Konfigurieren dieser Daten kann z.B. über die Eingabetastatur einer als Betriebsterminal festlegbaren Endeinrichtung T1...Tn oder über ein gegebenenfalls vorgesehenes eigenständiges Betriebsterminal erfolgen.

Als Teileinheit des Arbeitsspeichers A können in einem gesonderten Speicherteil diejenigen Informationen abgelegt sein, die als vermittlungstechnische Informationen auf einem an der Endeinrichtung angeordneten Display DL dargestellt werden sollen. Die jeweils aktuellen Signalisierungsinformationen werden abhängig von dem vermittlungstechnischen Zustand durch die zentrale Steuerrechnereinheit ZSt festgelegt und aus dem Speicher DS der jeweiligen Endeinrichtung T1...Tn übermittelt. Stellt die Vermittlungsanlage VE ein Key-Kommunikationssystem dar, so kann die der jeweiligen Endeinrichtung übermittelte Information beispielsweise eine Aussage über den Belegungszustand einer Leitung L und/oder der übrigen Endeinrichtungen beinhalten. Auf diesem Display DL sind auch die im Zusammenhang mit dem Aufbau und dem Umkoppeln einer Verbindung für den Teilnehmer bestimmten Hinweise darzustellen. So können beispielsweise die für eine optische Bedienerführung vorgesehenen kurzen Informationstexte auf diesem Display DL angezeigt werden.

Für die Teilnehmerendeinrichtung T1 sind in der Figur einzelne Funktionskomponenten dargestellt. Über das jeweilige a/b-Adernpaar werden Sprachinformationen und die Rufsignale übertragen. Mit diesen Sprechadern ist die Sprechschaltung Sp verbunden. Sie dient im Zusammenhang mit dem Handapparat HA der Verarbeitung der übertragenen Sprachinformationen und bildet den Leitungsabschluß.

Mit der Einheit Ts ist schematisch eine Tastatur dargestellt, die mit einer in jeder Endeinrichtung T1...Tn zur Steuerung ihrer Funktionen vorhandenen und z.B. durch einen Prozessor realisierten Steuereinheit PE gekoppelt ist. Die Taste Tw steht symbolisch für eine übliche Wähltastatur. Die Taste Tf steht für eine Reihe von weiteren Tasten, insbesondere sogenannten Funktionstasten, durch deren Betätigung jeweils bestimmte Funktionsabläufe aktiviert werden können. Hierzu gehören mittels des Anlagenbetriebsprogrammes realisierbare Leistungsmerkmale. Den Funktionstasten Tf können bestimmte Funktionen fest zugeordnet sein oder alternativ hierzu frei zugeordnet werden.

Mit der Steuereinheit PE sind ferner die Einheiten IR, UD, Se und DL verbunden. Die Einheit IR erkennt die Betätigung einzelner Tasten Tw, Tf, bildet entsprechende Signalisierungsinformationen und gibt diese über die Signalisierungsadern c/d an die Vermittlungsanlage VE oder unmittelbar an das der Teilnehmerendeinrichtung zugeordnete Display DL ab. Beispielsweise werden durch Wähltasten Tw erzeugte Anreize als Ziffern auf dem Display DL dargestellt. Die Einheit UD registriert Informationen, die einer Teilnehmerendeinrichtung über die jeweiligen c/d-Signalsisierungsadern von der Vermittlungsanlage VE zur weiteren Verarbeitung zugeführt werden. Die Einheit Se ist als Speicher ausgebildet und dient beispielsweise der Aufnahme eines Betriebsprogrammes für die Steuereinheit PE und für zwischenzuspeichernde Daten. Neben dem Handapparat enthält die Teilnehmerendeinrichtung T1 eine Freisprecheinrichtung FS. In der Regel kann durch eine hierfür bestimmte Funktionstaste das darin enthaltene Mikrophon M und der Lautsprecher La wirksam geschaltet werden. Es kann also dann ohne Abheben des Handapparates freisprechend ein Gespräch geführt werden.

Für die Realisierung von leistungsmerkmalspezifischen Steuerprozeduren beinhaltet die zentrale Steuerrechnereinheit ZSt einzelne Programmsteuerungen, die auf die in den entsprechenden Einheiten der Speichereinrichtung SE enthaltenen Steuerdaten zugreifen.

Es wird nun davon ausgegangen, daß bestimmte Endeinrichtungen beispielsweise die Endeinrichtung T1 Teil eines Bildschirmarbeitsplatzes sind. Neben dieser Endeinrichtung ist also ein Datensichtgerät, ein Terminal bzw. ein Personalcomputer PC vorhanden. Vermittels dieses Personalcomputers PC können beispielsweise im Zusammenhang mit Verwaltungsaufgaben, der Kundenberatung, Buchhaltung, Reklamationsbearbeitung usw. bestehende Anwenderprogramme ablaufen, bzw. es werden aus bestimmten gespeicherten Dateien Informationen abgefragt. Bei dieser Bearbeitung von Vorgängen werden am Bildschirm des Personalcomputers PC Textinformationen dargestellt, die auch Fernsprech-Rufnummern enthalten. Diese Rufnummer kann im Rahmen einer Textinformation, der einen bestimmten Vorgang betrifft, angezeigt werden oder ihre Darstellung erfolgt aufgrund eines eingeleiteten Suchvorganges, mit dem ein bestimmter Teilnehmer aus einem entsprechend abgespeicherten Telefonverzeichnis ermittelt wird. Insbesondere bei telefonintensiven Arbeitsplätzen wird es häufig der Fall sein, daß eine Telefonverbindung zu dem der anzeigten Rufnummer entsprechenden Teilnehmeranschluß aufgebaut werden soll. Es ist nun nicht mehr erforderlich hierfür diese angezeigte Rufnummer manuell einzuwählen, sondern es kann der Personalcomputer als Zusatzeinrichtung für eine automatische Wählhilfe herangezogen werden. Dies ist insbesondere dann sinnvoll, wenn es sich um externe Teilnehmeranschlüsse handelt.

Die im Zusammenhang mit einem bestimmten Arbeits- bzw. Suchvorgang auf dem Bildschirm des Personalcomputers dargestellte Fernsprechrufnummer kann unmittelbar zur Herstellung einer Verbindung abgerufen und dem Kommunikationssystem VE übermittelt werden. Um diese Wählfunktion zu aktivieren, wird eine Markierung der betreffenden angezeigten Rufnummer vorgenommen. Diese Markierung könnte beispielsweise durch ein festgelegtes Sonderzeichen automatisch erfolgen oder es kann diese Markierung durch das Setzen des Cursors vorgenommen werden. Wurde die Rufnummer aus einer Datei aufgrund bestimmter eingegebener Suchalgorithmen beispielsweise menügesteuert ausgewählt, so könnte bei einer isolierten Darstellung auf dem Bildschirm das Setzen des Cursors bereits der Auftrag für das Aktivieren der Wählhilfefunktion sein.

In den anderen Fällen einer Anzeige der Rufnummer ist es denkbar, diesen Auftrag durch die Betätigung einer für diesen Zweck vorgesehenen Funktionstaste abzugeben. Die nach der Darstellung auf dem Bildschirm ausgewählte Rufnummer wird als entsprechende Dateninformation der mit dem Personalcomputer PC verbindbaren Schnittstelleneinrichtung SN übergeben. Dies hat zur Folge, daß die Leitungsadern a/b an diese Schnittstelleneinrichtung SE wirksam angeschaltet werden und die Nutzverbindung zu dem räumlich dem Personalcomputer zugeordneten Fernsprechendgerät T1 getrennt wird. In der symbolischen Zeichnung gemäß der Figur erfolgt diese Umschaltung durch den Kontakt u eines Relais U, das spätestens nach der Übergabe dieser Dateninformation an die Schnittstelleneinrichtung SN durch diese aktiviert wird.

Gleichzeitig wird durch die Einheit AT in der Vermittlungseinrichtung das Schließen der a/b Leitungsschleife erkannt. Diese Tatsache und/oder die Abgabe einer weiteren Kenninformation führt dann zur Anschaltung der entsprechenden Wahlempfangsglieder. Durch die Schnittstelleneinrichtung SN die auch eine Teileinheit der Datenverarbeitungseinrichtung PC darstellen kann, wird die Wahlinformation über die a/b Leitungsverbindung jeweils in dem für die Vermittlungseinrichtung vorgesehenen Wahlverfahren übermittelt. Erfolgt die Wahl von einem Key-Fernsprechendgerät aus, so werden die Wahlinformationen über die Steuerverbindung c/d übertragen. Aus der Tatsache, daß diese Wahlinformationen über die a/b Adern der Anschlußleitung übertragen werden, kann die Vermittlungseinrichtung VE erkennen, daß von der Zusatzeinrichtung PC gewählt wird. Es ist nämlich zusätzlich nach der Identifizierung der betreffenden Anschlußleitung aus dem Kundendatenspeicher KD entnehmbar, daß für den betreffenden Anschluß eine Gerätekombination aus Fernsprechendeinrichtung T1 und Personalcomputer PC vorgesehen ist. Ist für die Vermittlungseinrichtung VE die Anschaltung von zweiadrig angeschlossenen Endeinrichtungen neben den vieradrig angeschlossenen Key-Fernsprechendeinrichtungen möglich, so sind die erwähnten Wahlempfangsschaltungen zur Bewertung der Wahlinformation sowieso vorhanden.

Nachdem in der Vermittlungseinrichtung VE erkannt wurde, daß die Wahl durch den als Wahlhilfe anzuschließenden Personalcomputer PC erfolgt, so wird der betreffenden Fernsprechendeinrichtung T1 über die Signalisierungsadern c/d der Teilnehmeranschlußleitung eine bestimmte Signalisierungsinformation übermittelt. Es wird von der Einheit UD registriert und bewirkt über die Steuereinheit PE einen Schaltbefehl für die Freisprecheinrichtung FS. Damit wird das in ihr enthaltene Mikrophon M und der Lautsprecher La vorbereitend wirksam geschaltet. Nach Beendigung der über die Schnittstelleneinrichtung SN ausgesendeten Wahlinformation wird das Relais U abgeschaltet. Nimmt der Kontakt u erneut seine Ruhestellung ein, ist die Nutzverbindung a/b wieder zu dem Fernsprechendgerät T1 durchgeschaltet. Nach der automatisch erfolgten Aktivierung der Freisprecheinrichtung FS kann also der Teilnehmer, der in der geschilderten Weise über die Wahlhilfe in der vereinfachten Handhabung die Wahlinformation abgesetzt hat unmittelbar die Gesprächsverbindung aufnehmen. Diese Möglichkeit der Gesprächsaufnahme im Freisprechmodus ist insbesondere für Arbeitsplätze vorteilhaft, bei denen häufig während des täglichen Arbeitsablaufes Gesprächsverbindungen mit externen Teilnehmern erfolgen. Mit der automatischen Anschaltung der Freisprecheinrichtung wird ein hohes Maß an Bedienungskomfort erreicht. Die für die Teilnehmerseite genannten Geräte, nämlich das Fernsprechendgerät T1, die Datenverarbeitungseinrichtung PC sowie die Schnittstelleneinrichtung SE können auch in einem einzigen speziellen Endgerät eingebracht sein, mit dem dann insgesamt die notwendigen Funktionen erfüllt werden.

## Patentansprüche

1. Verfahren zur Aktivierung des Bereitschaftszustandes einer Fernsprechendeinrichtung (T1) in einem Kommunikationssystem (VE) mit einer zentralen Steuerrechnereinheit (ZSt) mit einem Programmspeicher (P), einem Arbeitsspeicher (A) und einem Anlagenkonfigurationsdaten und benutzerindividuelle Daten enthaltenden Kundendatenspeicher (KD) und mit einem die Systemkomponenten verbindenden Systembus (SB), wobei für den Anschluß der Fernsprechendeinrichtung (T1) eine Nutzverbindung (a/b) und zusätzlich eine für den digitalen Datenaustausch dienende Steuerverbindung (c/d) vorgesehen ist und die Fernsprechendeinrichtung (T1) neben dem üblichen Handapparat eine das Mikrophon (M) und den Lautsprecher (La) beinhaltende Freisprecheinrichtung (FS) aufweist, wobei die Wahlinformationsabgabe auch vermittels einer an die jeweilige Anschlußleitung anschaltbaren Zusatzeinrichtung (PC) erfolgen kann, wobei durch eine entsprechende Anforderung die Rufnummer des gewünschten Teilnehmeranschlusses aus einem darin enthaltenen Speicher abgerufen und als Wahlinformation dem Kommunikationssystem (VE) übermittelt wird,
**dadurch gekennzeichnet,**
daß bei der genannten Anforderung durch die Zusatzeinrichtung (PC) selbst oder durch eine ihr zugeordnete Schnittstelleneinrichtung (SN) eine durch die zentrale Steuerrechnereinheit (ZSt) des Kommunikationssystems (VE) auswertbare Kenninformation gebildet und dorthin übertragen wird,
daß dadurch die systemseitige Registrierung der anschließend aufgrund der Anforderung automatisch übertragenen Wahlinformation veranlaßt wird,
daß mit der Registrierung der Kenninformation und im Zusammenhang mit dem systemseitigen Erkennen, daß die Wahlinformation von der Zusatzeinrichtung (PC) stammt, und der aus dem Kundendatenspeicher ausgelesenen Information über die für den betreffenden Anschluß vorgesehene Gerätekombinationsart (T1, PC) durch die zentrale Steuerrechnereinheit (ZSt) über die Steuerverbindung (c/d) der Fernsprechendeinrichtung (T1) eine Signalisierungsinformation zugeführt wird, durch die die Freisprecheinrichtung (FS) vorbereitend wirksam geschaltet wird und daß unmittelbar nach der Beendigung der Wahlinformationsabgabe die endgültige Kopplung mit der Freisprecheinrichtung (FS) erfolgt, so daß der Teilnehmer in die Gesprächsverbindung eintreten kann ohne eine Prozedur an der Fernsprechendeinrichtung (T1) vornehmen zu müssen.

2. Verfahren nach Anspruch 1,
**dadurch gekennzeichnet,**
daß die Zusatzeinrichtung (PC) gegebenenfalls unter Zwischenschaltung einer Schnittstelleneinrichtung (SN) an die genannte Nutzverbindung (a/b) zur Übertragung der normalerweise über die Steuerverbindung (c/d) übermittelten Wahlinformationen wirksam angeschaltet wird und gleichzeitig die Abtrennung der Fernsprechendeinrichtung (T1) von der Nutzverbindung (a/b) erfolgt, daß bei dieser Anschaltung die durch die zentrale Steuerrechnereinheit (ZSt) diesbezüglich erkennbare Kenninformation gebildet wird.

3. Verfahren nach Anspruch 1 oder 2,
**dadurch gekennzeichnet,**
daß als Zusatzeinrichtung ein Personalcomputer (PC) vorgesehen ist, der eine Speichereinheit enthält, in der eine Datei bzw. mehrere nach unterschiedlichen Kriterien geordnete Dateien für die aufgrund der Anforderung erfolgende automatische Feststellung der Rufnummer von Teilnehmeranschlüssen und/oder teilnehmerbezogene Informationen einschließlich zuzuordnender Teilnehmerrufnummern zur Darstellung auf dem Bildschirm abgespeichert sind, daß die auf dem Bildschirm dargestellten Rufnummern eines Teilnehmeranschlusses durch eine entsprechende Markierung gekennzeichnet wird, wodurch die betreffende Rufnummer gegebenenfalls nach Betätigung einer hierfür vorgesehenen Auftragstaste als Dateninformation einer Schnittstelleneinrichtung (SN) übergeben wird, die sie in einem bestimmten Übertragungsverfahren unmittelbar als Wahlinformation zu dem Kommunikationssystem (VE) nach Bildung der dort vermittels einer entsprechenden Indikationsschaltung auswertbaren Kenninformation überträgt.

4. Verfahren nach Anspruch 3,
**dadurch gekennzeichnet,**
daß die Markierung durch Setzen des Cursors auf eine vorbestimmte Stelle, vorzugsweise dem ersten Zeichen der angezeigten Rufnummer erfolgt.

5. Verfahren nach Anspruch 2,
**dadurch gekennzeichnet,**
daß die Feststellung der Rufnummer menügesteuert mit Zugriff auf die jeweils maßgebende abgespeicherte Datei aufgrund unterschiedlicher Suchbegriffe erfolgt, wobei als Ergebnis die dem gewünschten Teilnehmer betreffende Rufnummer in einer Einzeldarstellung oder als eine Teilmenge eines Teilnehmerverzeichnisses auf dem Bildschirm des Personalcomputers (PC) dargestellt wird.

6. Verfahren nach Anspruch 5,
**dadurch gekennzeichnet,**
daß bei der Darstellung einer Teilmenge eines Teilnehmerverzeichnisses die Selektion der gewünschten Rufnummer durch Setzen des Cursors vornehmbar ist, daß dadurch unmittelbar die betreffende Rufnummer als Wahlinformation für den Aufbau einer Gesprächsverbindung abrufbar ist.

7. Verfahren nach den Ansprüchen 1 und 2,
**dadurch gekennzeichnet,**
daß die Funktionen der Fernsprechendeinrichtung (T1), der Schnittstelleneinrichtung (SN) sowie der Datenverarbeitungseinrichtung (PC) in einem einzigen Endgerät realisiert sind.

## Claims

1. Method for activating the call state of a telephone terminal (T1) in a communications system (VE) comprising a central processor (ZSt) with a program memory (P), a main memory (A) and a customer data memory (KD) containing system configuration data and user-individual data and with a system bus (SB) connecting the system components, a user connection (a/b) being provided for connecting the telephone terminal (T1) and, in addition, a control connection (c/d) used for the digital data exchange being provided and the telephone terminal (Tl) exhibiting in addition to the usual handset, a hands-free device (FS) containing the microphone (M) and the loudspeaker (La), in which arrangement the dialling information can also be delivered by means of an ancillary device (PC) which can be connected to the respective subscriber line, the directory number of the desired subscriber line being retrieved from a memory contained therein and transmitted as dialling information to the communications system (VE) by means of a corresponding request, characterized in that in the case of the said request by the ancillary device (PC) itself or by an interface device (SN) allocated to it, an identification information item which can be evaluated by the central processor (ZSt) of the communications system (VE) is formed and transmitted thereto, in that, as a result, recording of the dialling information subsequently automatically transmitted on the basis of the request is initiated at the system and,
in that both the recording of the identification information and in connection with the recognition at the system end that the dialling information originates from the ancillary device (PC), and the information read out of the customer data memory on the type of equipment combination (T1, PC) provided for the relevant line, the telephone terminal (Tl) is supplied by the central processor (ZSt) via the control connection (c/d) with a signalling information item by means of which the hands-free device (FS) is preparatorily activated and in that immediately after the delivery of dialling information has ended, the final coupling to the hands-free device (FS) is effected so that the subscriber can enter into the call without having to carry out a procedure at the telephone terminal (Tl).

2. Method according to Claim 1, characterized in that the ancillary device (PC) is effectively connected to the said user connection (a/b) for transmitting the dialling information items normally transmitted via the control connection (c/d), if necessary by interposition of an interface device (SN), and, at the same time, the telephone terminal (T1) is disconnected from the user connection (a/b), and in that during this connection, the identification information item, which can be recognized in this respect by the central processor (ZSt), is formed.

3. Method according to Claim 1 or 2, characterized in that a personal computer (PC) is provided as ancillary device which contains a memory unit in which a file or a number of files ordered in accordance with different criteria are stored for the automatic determination of the directory number of subscriber lines, which takes place on a basis of the request, and/or subscriber-related information items including subscriber's directory numbers to be allocated for display on the screen, in that the directory numbers of a subscriber line displayed on the screen are identified by a corresponding marking, as a result of which the relevant directory number is transferred as data information, if necessary after operation of a job key provided for this purpose, to an interface device (SN) which transmits it in a particular transmission process directly as dialling information to the communications system (VE) after forming the identification information item which can be evaluated there by means of a corresponding alarm indication circuit.

4. Method according to Claim 3, characterized in that the marking is effected by setting the cursor to a predetermined position, preferably the first character of the directory number displayed.

5. Method according to Claim 2, characterized in that the directory number is determined under menu control with access to the in each case determining stored file on the basis of different search terms, the directory number relating to the desired subscriber being displayed as a result in an individual representation or as a subset of a subscriber directory on the screen of the personal computer (PC).

6. Method according to Claim 5, characterized in that in the case of the representation of a subset of a subscriber directory, the desired directory number can be selected by setting the cursor, in that, as a result, the relevant directory number can be called up directly as dialling information for setting up a call.

7. Method according to Claims 1 and 2, characterized in that the functions of the telephone terminal (Tl), of the interface device (SN) and of the data processing device (PC) are implemented in a single terminal.

## Revendications

1. Procédé pour activer l'état de disponibilité d'un terminal téléphonique (T1) dans un système de communication (VE) comportant une unité centrale formant ordinateur de commande (ZSt), une mémoire de programmes (P), une mémoire de travail (A), une mémoire de données d'utilisateur (KD) comportant des données de configuration de l'installation et des données individuelles à l'utilisateur (KD) et un bus de système (SB) reliant les constituants du système, du type dans lequel, pour le raccordement du terminal téléphonique (T1), il est prévu une liaison utile (a/b) et, en plus, une liaison de commande (c/d) servant à l'échange numérique de données, le terminal téléphonique (T1) comportant en plus du combiné usuel, un dispositif de conversation mains libres (FS), comportant le microphone (M) et le haut-parleur (La), alors que l'emission des informations de sélection peut s'effectuer également au moyen d'un dispositif supplémentaire (PC) susceptible d'être relié à la ligne de raccordement concernée, et que, par une demande correspondante, le numéro d'appel de la ligne d'abonné souhaitée est appelée à partir d'une mémoire qu'elle contient, et est transmis en tant qu'information de sélecton au système de communication (VE),
caractérisé par le fait
que lors de ladite demande, une information de caractérisation susceptible d'être évaluée par l'unité centrale formant ordinateur de commande (ZSt) du système de communication (VE) est formée, par le dispositif supplémentaire (PC), directement ou par l'intermédiaire d'un dispositif d'interface qui lui est associé et y est transmise,
que de ce fait l'enregistrement, côté système, de l'information de sélection transmise automatiquement ensuite sur la base de la demande, est déclenché,
qu'avec l'enregistrement de l'information de caractérisation et en rapport avec la reconnaissance, côté système, du fait que l'information de sélection provient du dispositif supplémentaire (PC), et en rapport avec l'information, extraite de la mémoire de données de l'utilisateur, concernant le type (T1, PC) de combinaison d'appareils prévus pour le raccordement concerné, on envoie, par l'unité formant ordinateur de commande (ZSt) centrale, par l'intermédiaire de la liaison de commande (c/d), au terminal de télécommunication (T1), une information de signalisation par l'intermédiaire de laquelle le dispositif de conversation mains libres (FS) est branché avec action préparatoire, et que l'on effectue, directement après la fin de la délivrance de l'information de sélection, le couplage définitif avec le dispositif de conversation mains libres (FS), en sorte que l'abonné peut entrer dans une liaison de conversation sans avoir à effectuer une procédure au niveau du terminal de téléphonique (T1).

2. Procédé suivant la revendication 1,
caractérisé par le fait
que l'on branche le dispositif supplémentaire (PC) est branché de manière active, éventuellement par l'intermédiaire d'un dispositif d'interface (SN), à ladite liaison utile (a/b), en vue de la transmission des informations de sélection transmises normalement par la liaison de commande (c/d), et, simultanément, intervient la séparation entre terminal de téléphonique (T1) et la liaison utile (a/b), alors que lors de ce branchement, il se forme l'information de caractérisation qui peut être reconnue par l'unité formant calculateur de commande centrale (ZSt).

3. Procédé suivant la revendication 1 ou 2,
caractérisé par le fait
que l'on prévoit, comme dispositif supplémentaire, un ordinateur personnel (PC), qui comporte une unité de mémoire dans laquelle on mémorise une donnée ou plusieurs données, ordonnées suivant différents critères, pour la détermination automatique et s'effectuant sur la base de la demande, du numéro d'appel des lignes d'abonnés et/ou d'informations rapportées aux abonnés, y compris les numéros d'appel à associer, pour la représentation sur l'écran,
que l'on caractérise les numéros d'appel d'une ligne d'abonné, représentés sur l'écran par un repère correspondant, le numéro d'appel concerné étant transmis, éventuellement après la commande d'une touche prévue à cet effet, en tant qu'information de données, à un dispositif d'interface (SN), qui transmet cette information, au cours d'un procédé de transmission déterminé, directement en tant qu'information de sélection, au système de communication (VE), après la formation de l'information de caractérisation susceptible d'être évaluée dans le système au moyen d'un circuit d'indication correspondant.

4. Procédé suivant la revendication 3
caractérisé par le fait
que le repage s'effectue par positionnement du curseur en un emplacement prédéterminé, de préférence sur le premier signe du numéro d'appel affiché.

5. Procédé suivant la revendication 2,
caractérisé par le fait
que l'on effectue la détermination du numéro d'appel de manière commandée par menu avec accès à la donnée mémorisée et déterminante, sur la base de différentes notions de recherche, le numéro d'appel concernant l'abonné sollicité étant représenté, en tant que résultat, dans une représentation unique ou en tant qu'une partie d'un ensemble d'une caractéristique de l'abonné sur l'écran de l'ordinateur personnel (PC).

6. Procédé suivant la revendication 5,
caractérisé par le fait
que, lors de la représentation d'une partie d'une caractéristique d'abonné, on est susceptible d'effectuer la sélection du numéro d'appel souhaité par positionnement du curseur, en sorte que le numéro d'appel concerné peut être appelé directement, en tant qu'information de sélection, pour l'établissement d'une liaison de conversation.

7. Procédé suivant l'une des revendications 1 et 2,
caractérisé par le fait
que les fonctions du terminal de téléphonique (T1), du dispositif d'interface (SN) ainsi que du dispositif de traitement des données (PC), sont réalisées dans un seul terminal.
